# EUROPEAN PATENT SPECIFICATION

(11) **EP 1 681 317 B1**
(45) Date of publication and mention of the grant of the patent: **26.08.2009**
(21) Application number: 05075106.4
(22) Date of filing: 14.01.2005
(51) Int. Cl.: C08L 91/06, C08L 91/08, C09D 191/06, C09D 191/08, F16C 33/12

(54) **Protective composition**
Schutzzusammensetzung
Composition de protection

(43) Date of publication of application: 19.07.2006
(73) Proprietor: AB SKF, 415 50 Göteborg (SE)
(72) Inventor: Meijer, Dick, 4001 DJ Tiel (NL)
(74) Representative: van Westenbrugge, Andries

(56) References cited:
- US-A- 4 464 275
- US-A- 5 106 415
- US-A- 5 888 281
- "Encyclopedia of Chemical Technology" 1983, WILEY AND SONS , USA * page 717 - page 718 *

## Description

The present invention relates to a process for preparing a protective composition, said process comprising mixing an oil and a wax at a temperature above the wax transition temperature to form a homogeneous composition, and quenching the homogeneous composition to ambient temperature to obtain a composition having thixotropic properties. The composition is very suitable for protecting metal objects, in particular bearings, against corrosion.

### Background of the invention

Metal objects such as bearings are usually protected during e.g. storage and transport against corrosion and other detrimental factors by providing the metal object with a layer of a protective composition, e.g. a protective oil or grease composition. However, protective oil and grease compositions have several drawbacks. Coatings of protective oil compositions, although easily applied to the metal object, tend to drip off from the metal object with the result that the protection of the metal object is no longer sufficient. In particular, because of the drip off effect the thickness of the protective coating layer of the protective oil is in general less than about 1 µm. An option to circumvent this problem is to use a grease. But thin coatings of protective grease compositions are far less easy to apply and such coatings have usually a thickness of in the order of 100 to 500 µm which implies that rather high amounts of protective material have to be used. Obviously, this is not very cost efficient.

Another option to solve the dripping off problem that is used in the art is the application of a protective oil composition having thixotropic properties wherein the composition includes a thixotropic material, e.g. high molecular weight styrenebutadiene-styrene terpolymers. However, such protective oil compositions also provide rather thick layers, i.e. over 100 µm, of the protective coating. Moreover, the preparation of such protective oil compositions require heating the mixture of the oil and the thixotropic additive to high temperatures in order to dissolve or disperse the thixotropic additive into the oil.

US 3.080.330 discloses a rust preventive oil based composition, wherein the oil is thickened with a mixture of polyethylene and microcrystalline wax. The composition is prepared by adding about 1-2 wt.% of the polyethylene and about 1 - 3 wt.% of the microcrystalline wax to the oil and heating while stirring to about 150°C in order to melt the wax and disperse it into the oil. The composition is then allowed to cool to room temperature under normal conditions prior to use. The composition optionally comprises rust preventing additives. It is not disclosed or suggested that the rust preventive oil based composition has thixotropic properties.

US 5.106.415 discloses a protective coating composition and a method for coating a metal object with the protective coating composition. The protective coating composition comprises a dispersion of finely divided wax particles having a particle size in the range of 0.5 to 400 µm in an oil and has the capability of forming a solid coating on a metal object coating therewith. The composition is produced by admixing 10 - 90 wt.% of the finely divided wax particles into 90 - 10 wt.% oil whereas according to the examples the weight ratio of the wax particles to oil is within the range of about 2 :1 to 3 :1. Additionally, according to the examples the compositions include a filling material, i.e. the organophilic clay Bentone 38 or the untreated fumed silica Cabosil M-5, in order to provide thixotropic properties. In the method, the metal object is coated with the protective coating composition, e.g. by spraying, where after the metal object is heated to a temperature above the melting temperature of the wax thereby providing a homogeneous coating on the metal object. Subsequently, the metal object is cooled to ambient temperature to provide a homogeneous solidified layer of the protective coating composition on the metal object. The cooling step is performed under normal conditions, although it may be performed by dipping the metal object in cold water.

### Summary of the invention

It is an object of the present invention to provide a protective composition having high stability and long life span, wherein the composition provides excellent corrosion protection and optionally also exhibits excellent lubrication properties composition

It is a further object of the present invention to provide a corrosion protective composition that enables the convenient application of a relatively thin coating layer of the protective composition on a metal object in order to save material costs.

It is a further object of the present invention to provide a thin but continuous coating layer to these objects that does not show any significant sagging or other loss of quality over time.

The present invention provides therefore a process for preparing a protective composition, said process comprising mixing an oil and a wax at a temperature above the wax transition temperature to form a homogeneous composition, and quenching the homogeneous composition to ambient temperature at a rate of at least 15°C per second. The present invention further provides the use of the protective composition to protect metal objects, in particular bearings, against corrosion.

### Detailed description of the invention

The present invention relates to a process for the manufacture of an oil-based protective composition having corrosion protective properties and preferably also lubrication properties, wherein a wax and an oil are mixed and heated to an elevated temperature to form a homogenous composition. According to the invention, an amount of 0.001 to 20 wt.%, preferably 0.01 to 17.5 wt.%, and more preferably 0.1 to 10.0 wt.%, of wax is mixed with the oil. The heating step involves heating to a temperature above the wax transition temperature which, however, is lower than the melting temperature of the wax. Subsequently, the homogeneous composition is rapidly cooled, i.e. "quenched", to ambient temperature at a cooling rate of at least 15°C per second, preferably at least 20°C per second. Interestingly, it was found that if the homogenous composition was cooled at normal cooling rates, the end product did not have the favourable properties as the end product obtained after quenching of the homogeneous composition.

Although the term "ambient temperature" will be apparent to the person skilled in the art, i.e. the temperature prevailing at the location where the quenching step is performed, in the Netherlands it encompasses in general a temperature range of about 15° to about 25°. However, as will be apparent to the person skilled in the art, it may not always be necessary to quench the homogeneous composition to ambient temperature, but that quenching to a higher temperature, e.g. 50°C, may be sufficient. For example, to realise the effect of the present invention, i.e. to provide a thixotropic protective composition, quenching to a temperature of e.g. 40°C below the wax transition temperature may be sufficient. On the other hand, quenching to ambient temperature is presumably the most convenient way to carry out the invention from a practical point of view.

It was found that quenching the homogeneous mixture lead to structural properties that are different from those of composition known in the art that are obtained by cooling at normal cooling rates. Moreover, the "frozen" protective composition according to the present invention exhibits stability over longer time scales, therewith prolonging its use as a lubrication coating layer of metal objects.

In addition, it was found that quenching yielded a protective composition showing thixotropic behaviour without the need for special thixotropic additives of filler materials that provide thixotropic properties. Consequently, the protective composition according to the invention can therefore suitably be applied to coat metal objects without the requirement of a preheating step. Furthermore, a continuous protective layer thus obtained has a thickness that is significantly lower than those obtained with known greases or known thixotropic oil formulations comprising high molecular weight polymers thereby providing a great cost benefit. Moreover, the coating layer of the protective composition according to the invention lasts over longer periods of time, because the wax does not sag from the composition.

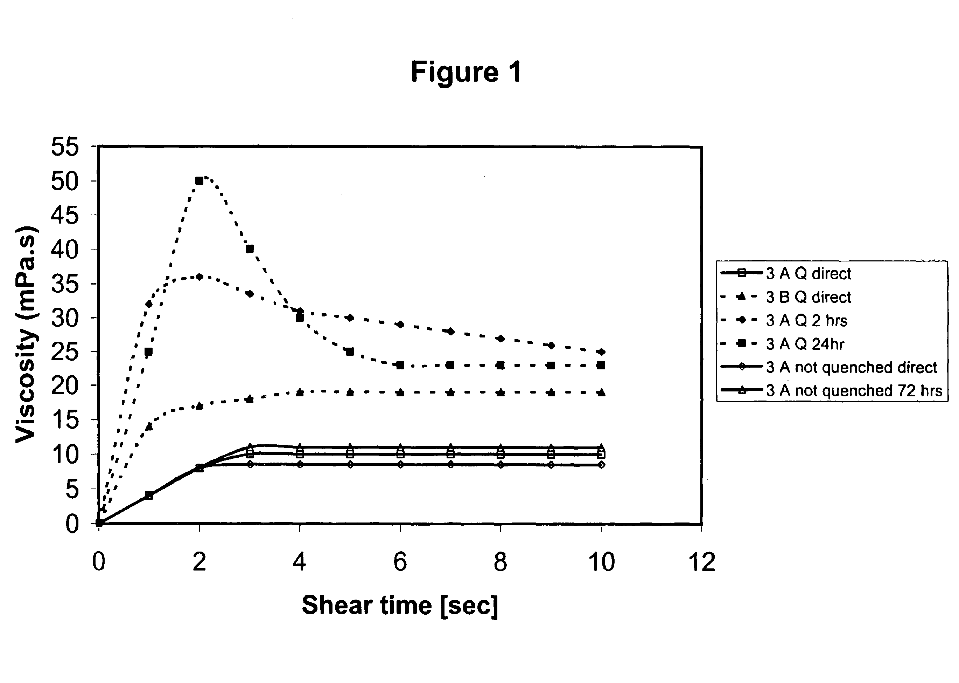

The protective composition according to the invention has a gel-like character and is translucent. Gelation can be measured by measuring the yield stress in time, i.e. the shear force required to break the gel-like composition. The yield stress will rise until a stable value is reached, at which point the composition is considered to be gelled and to behave thixotropic. Then, upon shear, the gelled composition of the invention maintains its solid-like property until the force applied on the gel reaches its yield stress, after which the gel breaks down. When shear is continued, a reduction in the viscosity of the composition is observed, only to disappear when shear is no longer applied. The viscosity and gelling properties then return to their initial values. Reference is made to Figure 1.

According to the invention, the homogeneous composition must be heated to a temperature above the wax transition temperature. The wax transition temperature appears from the lower inflection of a time-temperature cooling curve of the wax, whereas the upper inflection indicates the melting point. The significance of the wax transition temperature is similar to the better known glass transition temperature of polymers. The cooling curve can for example be determined according to ASTM D 87, ASTM D 127 and BS 4695. The wax transition temperature is preferably within the range of 30° to 150°C.

After quenching of the homogeneous composition to ambient temperature, it is preferred that the composition is annealed from a period of time since the annealing improves the thixotropic properties of the protective composition. Preferably, the annealing step is performed at ambient temperature for a period of one hour to two days.

According to the invention, the nature and properties of the oil are not extremely relevant. Therefore, all kinds of oils may be used, although it is preferred that the kinematic viscosity of the oil is within a certain range. According to the invention, the kinematic viscosity (40°C) is preferably 1 - 500 mm²/s, more preferably 5 - 300 mm²/s. At lower viscosities, the protective composition is too volatile and for safety reasons such compositions are often in practice undesirable because of their flammability. At higher viscosities, the handleability of the protective compositions is too poor.

The oil may be of synthetic or natural origin. Suitable synthetic oils comprise poly-α-olefins, esters, e.g. polyol esters and phosphate esters, polyglycols, polybutylenes, light oils such as naphta based solvents, e.g. Exxsol D 240, polysiloxanes which usually have a high viscosity index as is well known to the person skilled in the art. Suitable synthetic oils also include those obtained in a Fisher-Tropsch process. Suitable natural oils include mineral oils, vegetable and animal oils. Examples of mineral oils include spindle oils, turbine oils, motor oils and brightstock, which are optionally treated or refined, e.g. in a dewaxing operation. A suitable example of a vegetable oil is rape seed oil. A suitable example of an animal oil is tallow oil. However, according to the invention it is preferred that the oil is a paraffinic oil or a naphtenic oil, that is an oil having a moderate to high viscosity index, a low to moderate density and a moderate to high pour point.

According to the invention, the flash point of the oil is at least 110°C, more preferably at least 120°C. The flashpoint is determined according to ASTM D 92.

As indicated above, it is also preferred that oils have a moderate to high viscosity index. According to the invention, the viscosity index of the oil is preferably 80 to 200 as determined according to ASTM D 2270.

The nature and the properties of the wax employed in the invention is not very critical. Hence, the wax may of natural or synthetic origin. Natural waxes include mineral waxes, animal waxes, insect waxes and vegetable waxes whereas synthetic waxes include materials such as poly-α-olefins and certain Fisher-Tropsch products as well as "linear primary alcohols" having about 10 - 50 carbon atoms which are manufactured from vegetable oils. Suitable examples of mineral waxes include paraffin wax, microcrystalline wax and petrolatum (often referred to as mineral jellies or petroleum jellies which are amorphous mixtures of microcrystalline wax, mineral oil and paraffin wax; petrolatum is well known under the trade name Vaseline®) and these waxes can for example be differentiated by using the refractive index of the wax and its congealing point as determined by ASTM D 938. As is well known to the person skilled in the art, paraffin waxes have a high straight chain paraffin content and therefore a relatively high melting point. On the other hand, microcrystalline waxes mainly contain branched paraffins and naphtenic hydrocarbons resulting in lower melting points and are obtained by refining petrolatum. Animal and vegetable waxes include esters of fatty acids as is well known in the art. Insect waxes include esters of long chain alcohols and fatty acids. For example, beeswax is based on myricyl palmitate which is the ester of myricyl alcohol and palmitic acid. However, according to the invention it is preferred that the wax is a microcrystalline wax or a petrolatum.

The protective composition may further comprise common additives such as rust inhibitors (for example long chain phosphates and metal sulphonates), viscosity index improvers (for example styrene-isoprene-styrene star polymers), surfactants (for example salicylates), corrosion inhibitors (for example substituted azole compounds), extreme pressure/anti-wear additives (for example zinc dialkyldithiophosphates and molybdenum compounds), ashless dispersants (for example succinimides based on polybutylene, maleic anhydride and polyamine) and the like. The total amount of additives present in the protective composition is 0 - 10 wt%, based on the total weight of the protective composition.

The present invention also relates to the use of the protective composition to protect a metal object, in particular a bearing.

The present invention also relates to a process for protecting a metal object, preferably a bearing, against corrosion wherein the metal object is provided with a layer of the protective coating. Such a process may comprise subjecting the protective composition of the invention to shear and bringing it in contact with the surface of a metal, preferably a bearing. This process has the advantage over the process disclosed in US 5.106.415 that it is not necessary to preheat the protective composition prior to application to the metal object and to cool the coated metal object after the protective coating is applied.

The annealing step discussed above has the advantage that the composition can be deposited onto a metal object while the viscosity of the protective composition is still relatively low. However, once gelled, the protective composition of the invention can still conveniently be applied to the surface of a metal object making use of its thixotropic properties, by subjecting the protective composition to shear and thus bringing the viscosity down to working conditions. It is preferred that the oil-based preservative composition is subjected to shear within one hour before and/or during the coating step.

All kinds of deposition techniques can then be used to coat the metal object with the protective composition, although immersion, spraying or dipping of the metal object in the protective composition being most preferred. It is possible to continue shearing the protective composition of the invention while bringing it into contact with the metal object to be coated, or to stop applying shear force just prior to the coating step.

Once the protective composition is no longer subjected to shear, the composition returns to its original gel structure and forms a thin, continuous protective coating layer, without dripping effects. The thin coating layer preferably has an average thickness of 1 to 100 µm, more preferably within the range of 5 - 50 µm, without any dripping effects. The actual thickness of the coating layer can be fine-tuned by a person skilled in the art by varying the amount of wax in the composition.

The invention further relates to a metal object provided with a stable layer of the protective composition according to the invention, preferably with a thickness as mentioned above.

### EXAMPLE

A paraffin oil having a kinematic viscosity of 8 mm²/s at 40°C and 2 wt.% wax (wax transition temperature about 60°C) were mixed by using a speed controlled mixer equipped with propeller blades and heated to a temperature of 75°C until a homogenous mixture was obtained. Subsequently, the homogeneous composition was poured and spread on an aluminium plate (thickness 35 mm) to achieve a cooling rate of approximately 20°C per second. The quenched product was collected as subjected to shear until the desired viscosity was obtained. The shear stress was determined by employing a Brookfield viscometer (cone and plate). The results are shown in Figure 1.

## Claims

1. A process for preparing a protective composition, said process comprising mixing an oil and a wax at a temperature above the wax transition temperature to form a homogeneous composition, and quenching the homogeneous composition to ambient temperature at a rate of at least 15°C per second, provided that the homogeneous composition does not contain thixotropic additives.

2. The process according to Claim 1, wherein the wax is mixed with the oil in an amount of 0.001 to 20 wt.%, based on the total weight of the homogeneous composition.

3. The process according to Claim 1 or Claim 2,' wherein after quenching to ambient temperature the homogeneous composition is annealed at ambient temperature.

4. The process according to Claim 3, wherein the homogeneous composition is annealed for a period of one hour to two days.

5. The process according to any one of Claims 1 - 4, wherein the oil has a kinematic viscosity of 1 - 500 mm²/s at 40°C.

6. The process according to any one of Claims 1 - 5, wherein the oil is a paraffinic or a naphthenic oil.

7. The process according to any one of Claims 1 - 6, wherein the oil has a flashpoint of at least 110°C according to ASTM D 92.

8. The process according to any one of Claims 1 - 7, wherein the oil has a viscosity index of 80 to 200 according to ASTM D 2270.

9. The process according to any one of Claims 1 - 8, wherein the wax transition temperature in the range of 30° to 150°C.

10. The process according to any one of Claims 1 - 9, wherein the wax is a microcrystalline wax, a linear primary alcohol wax or a petrolatum.

11. A protective composition obtainable by the process according to any one of the preceding claims.

12. Use of the protective composition according to Claim 11 to protect a metal object against corrosion.

13. Use according to claim 12, wherein the metal object is a bearing.

14. Process for protecting a metal object against corrosion, wherein the metal object is provided with a layer of the protective composition according to Claim 11.

15. A metal object provided with a layer of a protective composition according to Claim 11, wherein the layer has an average thickness of 1 to 100 µm.

16. The metal object according to Claim 15, wherein the metal object is a bearing.

## Patentansprüche

1. Verfahren zum Erzeugen einer schützenden Zusammensetzung, wobei das Verfahren ein Vermischen eines Öles und eines Wachses bei einer Temperatur oberhalb der Umwandlungstemperatur des Wachses zum Bilden einer homogenen Zusammensetzung und ein Abkühlen der homogenen Zusammensetzung auf Umgebungstemperatur mit einer Geschwindigkeit von wenigstens 15°C pro Sekunde umfasst und vorgesehen ist, dass die homogene Zusammensetzung keine thixotropischen Additive enthält.

2. Verfahren nach Anspruch 1, bei welchem das Wachs mit dem Öl in einer Menge von 0,001 bis 20 Gewichtsprozent, basierend auf dem Gesamtgewicht der homogenen Zusammensetzung vermischt wird.

3. Verfahren nach Anspruch 1 oder 2, bei welchem nach dem Abkühlen auf Umgebungstemperatur die homogene Zusammensetzung bei Umgebungstemperatur getempert wird.

4. Verfahren nach Anspruch 3, bei welchem die homogene Zusammensetzung für eine Zeitdauer von einer Stunde bis zwei Tage getempert wird.

5. Verfahren nach einem der Ansprüche 1 bis 4, bei welchem das Öl eine kinematische Viskosität von 1 bis 500 mm²/s bei 40°C besitzt.

6. Verfahren nach einem der Ansprüche 1 bis 5, bei welchem das Öl ein Paraffin- oder ein Naphthenöl ist.

7. Verfahren nach einem der Ansprüche 1 bis 6, bei welchem das Öl einen Flammpunkt von wenigstens 110°C gemäß ASTM D 92 besitzt.

8. Verfahren nach einem der Ansprüche 1 bis 7, bei welchem das Öl einen Viskositätsindex von 80 bis 200 gemäß ASTM D 2270 besitzt.

9. Verfahren nach einem der Ansprüche 1 bis 8, bei welchem die Umwandlungstemperatur des Wachses im Bereich von 30° bis 150°C liegt.

10. Verfahren nach einem der Ansprüche 1 bis 9, bei welchem das Wachs ein mikrokristallines Wachs, ein lineares Primäralkoholwachs oder ein Petrolatum ist.

11. Schützende Zusammensetzung, die durch das Verfahren nach einem der vorhergehenden Ansprüche erreichbar ist.

12. Verwendung der schützenden Zusammensetzung nach Anspruch 11 zum Schützen eines metallischen Gegenstandes gegen Korrosion.

13. Verwendung nach Anspruch 12, bei welcher der Metallgegenstand ein Lager ist.

14. Verfahren zum Schützen eines Metallgegenstandes gegen Korrosion, bei welchem der Metallgegenstand mit einer Schicht aus einer schützenden Zusammensetzung nach Anspruch 11 versehen wird.

15. Metallgegenstand, der mit einer Schicht einer schützenden Zusammensetzung nach Anspruch 11 versehen ist, bei welchem die Schicht eine durchschnittliche Dicke von 1 bis 100 µm aufweist.

16. Metallgegenstand nach Anspruch 15, wobei der Metallgegenstand ein Lager ist.

## Revendications

1. Processus de préparation d'une composition protectrice, ledit processus comprenant le mélange d'une huile et d'une paraffine à une température supérieure à la température de transition de la paraffine pour former une composition homogène, et le refroidissement de la composition homogène jusqu'à la température ambiante à une vitesse d'au moins 15°C par seconde, à condition que la composition homogène ne contienne pas d'additifs thixotropiques.

2. Processus selon la revendication 1, dans lequel la paraffine est mélangée avec l'huile dans une proportion allant de 0,001 à 20 % en poids, en se basant sur le poids total de la composition homogène.

3. Processus selon la revendication 1 ou la revendication 2, dans lequel après refroidissement jusqu'à la température ambiante, la composition homogène est recuite à la température ambiante.

4. Processus selon la revendication 3, dans lequel la composition homogène est recuite pendant une période comprise entre une heure et deux jours.

5. Processus selon l'une quelconque des revendications 1 à 4, dans lequel l'huile a une viscosité cinématique de 1 à 500 mm²/s à 40°C.

6. Processus selon l'une quelconque des revendications 1 à 5, dans lequel l'huile est une huile paraffinique ou naphténique.

7. Processus selon l'une quelconque des revendications 1 à 6, dans lequel l'huile a un point d'éclair d'au moins 110°C selon l'ASTM D 92.

8. Processus selon l'une quelconque des revendications 1 à 7, dans lequel l'huile a un indice de viscosité de 80 à 200 selon l'ASTM D 2270.

9. Processus selon l'une quelconque des revendications 1 à 8, dans lequel la température de transition de la paraffine est située dans la plage allant de 30°C à 150°C.

10. Processus selon l'une quelconque des revendications 1 à 9, dans lequel la paraffine est une paraffine microcristalline, une paraffine d'alcool linéaire primaire ou une vaseline.

11. Composition protectrice pouvant être obtenue par le processus selon l'une quelconque des revendications précédentes.

12. Utilisation de la composition protectrice selon la revendication 11 pour protéger un objet métallique contre la corrosion.

13. Utilisation selon la revendication 12, dans laquelle l'objet métallique est un roulement.

14. Processus de protection d'un objet métallique contre la corrosion, dans lequel l'objet métallique est muni d'une couche de la composition protectrice selon la revendication 11.

15. Objet métallique muni d'une couche de composition protectrice selon la revendication 11, dans lequel la couche a une épaisseur moyenne de 1 à 100 µm.

16. Objet métallique selon la revendication 15, dans lequel l'objet métallique est un roulement.
